# EUROPÄISCHE PATENTSCHRIFT

(11) **EP 2 596 487 B1**
(45) Veröffentlichungstag und Bekanntmachung des Hinweises auf die Patenterteilung: **18.02.2015**
(21) Anmeldenummer: 10794855.6
(22) Anmeldetag: 24.09.2010
(51) Int. Cl.: G09B 21/00, G09F 9/37

(54) **MERKHILFE-GERÄT MIT STIFTEN MIT ELASTISCH-FLEXIBLEM SCHAFT**
MEMORY AID DEVICE COMPRISING PINS HAVING AN ELASTICALLY FLEXIBLE SHAFT
APPAREIL MNÉMOTECHNIQUE DOTÉ DE BROCHES AYANT UNE TIGE FLEXIBLE ÉLASTIQUE

(30) Priorität: 23.07.2010 DE 202010010545 U
(43) Veröffentlichungstag der Anmeldung: 29.05.2013
(73) Patentinhaber: Pröll, Robert, 64342 Seeheim-Jugenheim (DE)
(72) Erfinder: Pröll, Robert, 64342 Seeheim-Jugenheim (DE)
(74) Vertreter: Katscher Habermann Patentanwälte
(86) Internationale Anmeldenummer: PCT/DE2010/001134
(87) Internationale Veröffentlichungsnummer: WO 2012/010110

(56) Entgegenhaltungen:
- DE-U1-202008 016 590
- US-B1- 6 189 246

## Beschreibung

Die vorliegende Erfindung betrifft ein Gerät, das als Merkhilfe dient. In einem ein- oder zweiteiligem, flachen Gehäuse ist eine beliebige Anzahl Stifte mit elastisch-flexiblem Schaft in Öffnungen mit kreisförnigem Querschnitt so angeordnet, dass die Stift-Mittellinien identisch mit den Mittellinien der erwähnten Öffnungen sind, wobei diese Mittellinien senkrecht zur flachen Ebene des Gehäuses angeordnet sind. Die Stifte, die noch zu beschreiben sind, weisen an ihren Enden je einen Stiftkopf auf. In der einen Funktionsstellung dieser Stifte ragt jeweils ein Stiftkopf über die Oberfläche des Gehäuses hervor, während der jeweils andere Stiftkopf völlig im Gehäuse eingedrückt ist. Die erwähnten Stifte werden von Hand in diese beiden Endstellungen gedrückt. In diesen Endstellungen bleiben die Stifte infolge ihrer Gestaltung in Zusammenwirkung mit der Ausgestaltung des Gehäuses fixiert.

Die erwähnten Stifte, die im wesentlichen aus Kunststoff bestehen, können infolge ihrer Gestaltung geräuschlos in den Öffnungen hin und her bewegt werden. Merkhife-Geräte, die mit verschiebbaren Stiften versehen sind und die dazu dienen, auf einfache mechanische Art den Ablauf persönlicher Abläufe zu kontrollieren und die besonders für ältere Menschen und Blinde geeignet sind, sind bekannt.

Diese bekannten Merkhilfe-Geräte sind mit unelastischen Stiften versehen, die Einkerbungen aufweisen, in die Federelemente beim Erreichen ihrer Endstellungen einschnappen. Die dabei entstehenden Schnappgeräusche sind jedoch für die Umstehenden sehr lästig. Dies ist besonders nachteilig in Räumlichkeiten, in denen absolute Stille zu herrschen hat, z.B. in Bibliotheken, Kirchen usw.

Die vorliegende Erfindung geht in ihrer Aufgabenstellung von dem Stand der Technik aus, den die DE 20 2008 016 590.3 darstellt. In der erwähnten Schrift weist jeder Stift (3) einen kreisförmigen Querschnitt auf und ist an seinen beiden Enden mit je einer Ringkerbe (3.1) versehen, die zwischen zwei Federstäben (4.1) eines Federelementes (4) einrastbar ist, wobei jedes Federelement in einer Vertiefung (1.2) des dort als Platte (1) ausgebildeten Gehäuses angeordnet ist.

Die vorliegende Erfindung macht es sich zur Beseitigung der geschilderten Nachteile zur Aufgabe, ein Merkhilfe-Gerät mit Stiften zu schaffen, das folgende Bedingungen erfüllen soll:
1. Die Stifte sollen so ausgebildet sein, dass sie geräuschlos von Hand in die beiden Endstellungen verschoben und dort sicher fixierbar sind,
2. die Stifte sollen vorzugsweise aus Kunststoff in Massenproduktion, z.B. durch Spritz- oder Gießverfahren herstellbar sein,
3. das Gehäuse soll für den Einsatz der erwähnten Stifte ein- oder zweiteilig gestaltbar sein, wobei bei einteiligen Gehäusen diese aus beliebigem Material herstellbar sein sollen,
4. die Stifte sollen so gestaltet sein, daß sie bei jeder Länge in Bezug zur Dicke des Gehäuses ihre Funktion gemäß der Aufgabenstellung erfüllen können und
5. Die Stifte sollen nach der Montage des Merkhilfe-Gerätes nicht durch einfaches Herausdrücken mittels eines dafür geeigneten Werkzeug entfernt werden können.

Die Augabe wird erfindungsgemäß gelöst durch ein Merkhilfe-Gerät mit Stiften mit elastisch-fexiblem Schaft gemäß der Beschreibung, den Zeichnungen und den Schutzansprüchen.

Die Neuerung wird anhand von Zeichnungen näher erläutert. Es zeigt:
- Fig.1: eine Draufsicht eines erfindungsgemäßen Merkhilfe-Gerätes mit rechteckigem, zweigeteilten Gehäuse, mit mehreren neuerungsgemäßen Stiften,
- Fig.2: eine Seitenansicht der Darstellung gemäß Fig.1,
- Fig.3: einen Teilschnitt I-I gemäß Fig.1 in einer Ausführungsform des Gehäuses, bei der die Stifte in Führungshülsen angebracht sind, die im GehäuseUnterteil eines z.B. durch Spritzguss hergestellten Gehäuse einstückig mit dem Gehäuse-Unterteil verbunden sind und dicht bis zur Unterseite des Gehäuse-Oberteils reichen, wobei in der gezeigten Funktionsstellung der eine Stiftkopf über die Oberfläche des Gehäuses herausragt, während der zweite Stiftkopf ganz in das Gehäuse-Unterteil eingeschoben ist,
- Fig.4: einen Teilschnitt I - I gemäß Fig.1 in einer Ausführungsform des Gehäuses, bei der jeder Stift in einer unteren Gehäuseöffnung und in einer oberen Führungshülse angeordnet ist, wobei die obere Fühungshülse beim Herstellen des Gehäuses z.B. durch Spritzguß einstückig mit dem Gehäuse-Oberteil verbunden ist,
- Fig.5: eine Draufsicht auf einen neuerungsgemäßen Stift,
- Fig.6: eine Seitenansicht der Darstellung gemäß Fig.5,
- Fig.7: einen Schnitt II - II gemäß Fig.6,
- Fig.8: einen Schnitt II - II gemäß Fig,6, jedoch in einer Ausführungsform des Stiftes, bei der die beiden Stiftköpfe fehlen und ersetzbar sind durch nicht gezeichnete Zierköpfe, die z.B. aufgeklebt werden können,
- Fig.9: eine perspektivische Darstellung des Stiftes gemäß Fig.8,
- Fig.10: eine Draufsicht eines nicht geteilten Gehäuses in herzförmiger Form, das mit mehreren neurungsgemäßen Stiften versehen ist,
- Fig.11: eine Seitenansicht der Darstellung gemäßFig. 10,
- Fig.12: einen Teilschnitt III - III gemäß Fig.10 in einer Ausführungsform des Gehäuses aus Vollmaterial, wobei die Öffnungen mit kreisförmigem Querschnitt auf beliebige Weise hergestellt werden können, z.B. durch Bohren oder durch Einformen, wenn dieses Gehäuse z.B. durch Gießen, Spritzen o.ä. hergestellt wird und
- Fig.13: einen Teilschnitt III - III gemäß Fig.10 in einer Ausführungsform, bei der die Stifte in Gehäusehülsen eingesetzt sind, wobei diese Gehäusehülsen auf einer Seite mit Begrenzungs-Ringkanten versehen sind.

Die erfindungsgemäßen Stifte 200 , die aus einem, zum Spritzgießen geeigneten Kunststoff bestehen, der die erforderliche elastisch-flexiblen Eigenschaften aufweist, sind jeweils an ihren beiden Enden mit einem einen Stiftkopf 201 versehen, der mit jeweils einer Verbindungsfläche 203 einstückig verbunden ist. Beide Verbindungsflächen 203 sind jeweils durch zwei Wulstlaschen 204 verbunden, zwischen denen ein Spalt 205 vorgesehen ist. Die beiden Wulstlaschen 204 bilden den elastisch-flexiblen Schaft des Stiftes 200. Die Außenflächen der beiden Wulstlaschen 204 sind konkav nach Art eines langgestreckten Ellipsoids jeweils an den Verbindungsflächen 203 angeformt. Zwischen den beiden Wulstlaschen 204 ist ein Spalt 205 vorgesehen, der die elastische Beweglichkeit der Wulstlaschen erhöht.

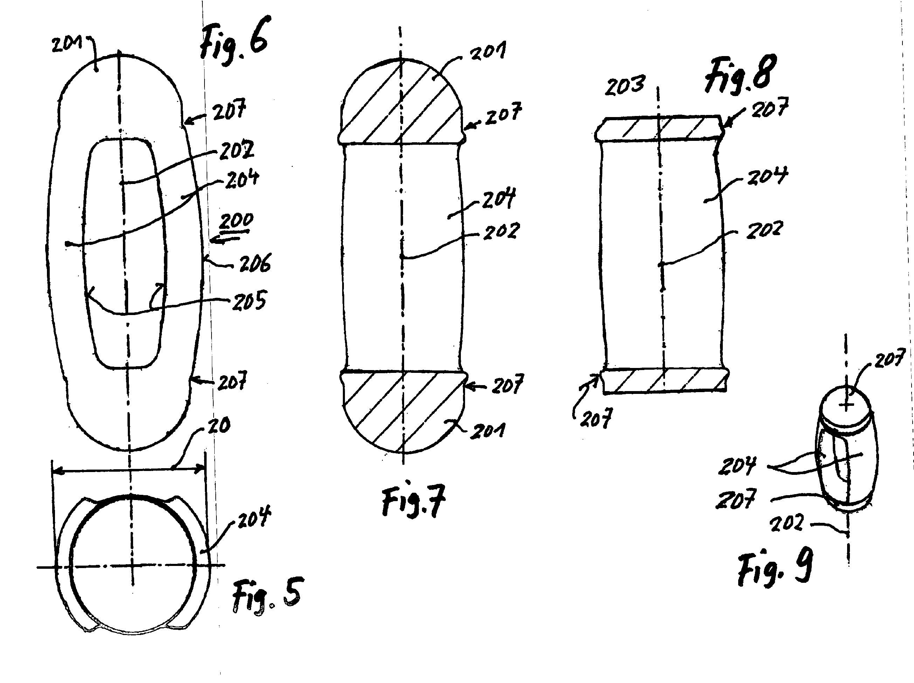

In Fig.5, Fig.6, Fig.7, Fig.8 und Fig.9 ist der neuerungsgemäße elastisch-flexible Stift 200 nach seiner Herstellung, vor dem Einsetzen in das betreffende Gehäuse 100 gezeigt, Hierbei ist das erste Maß 20 etwas größer als der Durchmesser der Öfffnungen 103 im betreffenden Gehäuse 100, wobei diese Öffnungen einen kreisförmigen Querschnitt aufweisen.

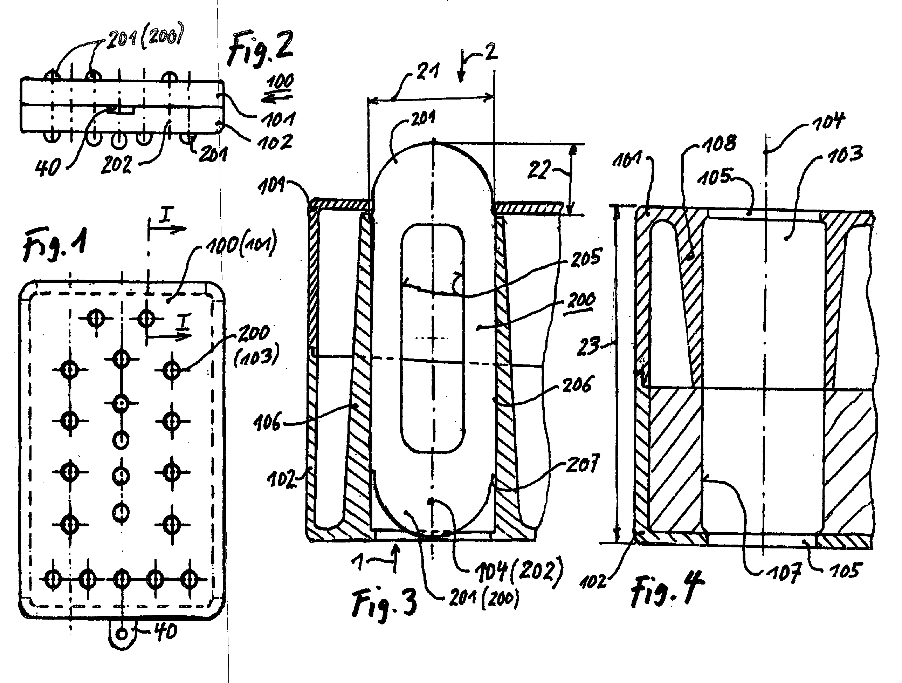

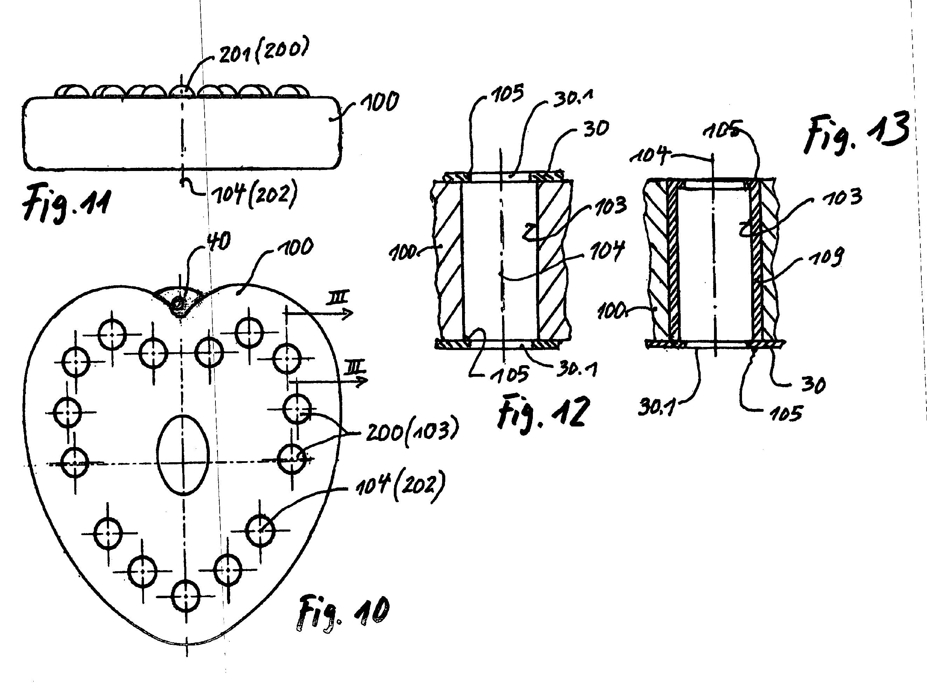

Bei dem Einsetzen der erwähnten Stifte in das betreffende Gehäuse 100 werden die beiden Wulstlaschen 204 um ein solches Maß elastisch zusammengedrückt, dass sich ihre beschriebenen Außenflächen als Anpressflächen 206 an die Wandung der Öffnungen 103 des Gehäuses 100 anschmiegen. Dadurch ist ein Reibschluss zwischen dem Stift und der betreffenden Öffnung 103 hergestellt. Jeder Stift 200 kann nun innerhalb der Öffnung 103 geräuschlos hin und her bewegt werden. Die fühlbare Endstellungen der Stifte 200, wie aus Fig.3 ersichtlich, wird erreicht durch einen, jeweils an der Verbindungsfläche 203, bzw. im unteren Bereich des Stiftes 200 angebrachten Anschlag-Ringwulst 207, der an einer kreisring- förmigen Begrenzungs-Ringkante 105 anliegt, die am Gehäuse 100 an der Oberseite und an der Unterseite des Gehäuses 100 angeformt oder mittels einer Auflage 30 gemäß Fig. 12 und Fig. 13 an dieser angebracht ist. Eine Anschlag-Ringwulst 207 ist an jedem Stiftkopf 201 , bzw. an der Verbindungsfläche 203 in der beschiebenen Weise angeformt.

Es ist ein wesentliches Merkmal der vorliegenden Neuerung, dass infolge des durch die beiden Wulstlaschen 204 gebildeten elastisch-flexiblen Schaftes jeder Stift 200 in den Öffnungen 103 des Gehäuses 100 geräuschlos hin und her bewegbar ist und infolge der Anordnung der Anschlag-Ringwulste 207 an den Stiften 200 diese in ihren beiden End-Funktionsstellungen fühlbar fixierbar sind.

In der einfachsten Ausführungsform ist das Gehäuse 100 gemäß Fig.10, Fig.11, Fig.12 und Fig. 13 als ebene Platte aus beliebigem Material ausgebildet und in dieser Art an sich bekannt. Neuerungsgemäß sind jedoch hierbei konstruktive Maßnahmen erforderlich, um die Stifte 200 nach ihrer Montage sicher im Gehäuse anzubringen. Hierfür wird in einer Ausführungsform gemäß Fig.12 auf beiden Oberflächen des plattenförmigen Gehäuses 100 je eine dünne Auflage 30, z.B. aus Blech oder Kunststoff befestigt, wobei die Auflage 30 mit Auflageöffnungen 30.1 versehen ist, deren Durchmesser dem der Stiftköpfe 201 entsprechen. Damit aber Begrenzungs-Ringkanten 105 für die Anschlag-Ringwulste 207 der Stifte vorhanden sind, ist der Durchmesser der Auflageöffnungen 30.1 um ein geringes Maß kleiner als der Durchmesser der betreffenden Öffnung 103, so dass sich die Anschlag-Ringwulst 207 des betreffenden Stiftes 200 an den unteren Rand der Auflageöffnung anpressen kann.

In einer weiteren Ausführungsform bei ungeteilter, plattenförmigen Gestaltung des Gehäuses 100 sind gemäß Fig.13 in dieses hohlzylinderförmige Gehäusehülsen 109 in Öffnungen eingesetzt. Die Gehäusehülsen 109, deren Länge der der Dicke des plattenförmigen Gehäuses entspricht, sind an einem Ende jeweils mit einer Begrenzungs-Ringkante 105 versehen. Der Innendurchmesser der Gehäusehülsen 109 entpricht dem Durchmesser der Öffnungen 103. Bei dieser Ausführungsform ist auf der anderen Seite des Gehäuses, auf der die Enden der Gehäusehülsen bündig mit der Oberfläche des Gehäuses abschließen, eine Auflage 30 mit Auflageöffnungen 30.1, wie vor, bei Fig.12 beschrieben, angebracht.

Bei zweigeteilter Ausführungsform des Gehäuses 100, z.B. gemäß Fig.1 und Fig.2, können das Gehäuse-Oberteil 101 und das Gehäuse-Unterteil 102 durch Gießen, Spritzgießen usw. auf bekannte Weise in Formen aus hierfür geeignetem Material hergestellt werden. Als Material können z.B. Aluminium, Kunststoff usw. Verwendet werden.

Dem jeweiligen Material entsprechend, können die Formen auf bekannte Weise hergestellt werden. In Fig.3 ist eine Ausführungsform eines zweigeteilten Gehäuses 100 gezeigt, bei der die Stifte 200 in Führungshülsen 106 angebracht sind. Diese Führungshülsen 106 sind im, z.B. durch Spritzgießen hergestellten Gehäuse-Unterteil 102 einstückig mit diesem verbunden und nach oben bis dicht an die Unterseite des Gehäuse-Oberteil reichen, wobei im Gehäuse-Oberteil 101 und im Gehäuse-Unterteil die Begrenzungs-Ringkanten 105 angeformt sind.

Ein weiteres Ausführungsbeispiel der Gestaltung eines zweigeteilten Gehäuses ist in Fig.4 gezeigt. Hierbei wird jeder Stift 200 in einer unteren Gehäuseöffnung 107 und in einer oberen Führungshilfe 108 geführt, die einstückig mit dem Gehäuse-Oberteil verbunden ist.

Die Art der Formung der Elemente, die bei zweigeteilten Gehäusen zur Führung der Stifte 200 dienen, sind abhängig vom Material des Gehäuses und sind dem Formenhersteller bekannt.

In Fig.5 zeigt das erste Maß 20 den Abstand der Außenflächen der beiden Wulstlaschen 204 vor dem Ensetzen des betreffenden Siftes 200 in das Gehäuse 100. In Fig.3 zeigt das zweite Maß 21 den Durchmesser einer Öffnung 103, in der ein Stift 200 eingesesetzt ist, wobei die beiden Wulstlaschen 204 an der Wandung der Öffnung 103 anliegen. In Fig.3 und Fig.6 ist die Länge eines Stiftkopfes 201 mit dem driten Maß 22 bezeichnet und in Fig.4 die Dicke des Gehäuses 100 mit dem vierten Maß 23.

Der erste Pfeil 1 gemäß Fig.3 zeigt die Richtung, in der der Stift 200 in seine obere Endstellung verschoben ist. Beim Eindrücken in Richtung des zweiten Pfeils 2 wird der Stift in seine untere Endstellung verschoben. Auf einer Seite des Gehäuses kann eine Anhängelasche angebrach, bzw. angeformt werden.

## Patentansprüche

1. Merkhilfe-Gerät mit Stiften mit elastisch-flexiblem Schaft, das ein flaches Gehäuse (100) aufweist, das mit einer Mehrzahl Öffnungen (103) mit kreisförmigem Querschnitt versehen ist, deren Mittellinien (104) parallel
zueinander und senkrecht zur Ebene des Gehäuses ausgerichtet sind und
die zur Führung von längs verschiebbaren Stiften dienen, die in zwei Endstellungen so verschiebbar sind, das jeweils ein Stiftende aus dem Gehäuse hervor ragt, während sich das andere Siftende im Gehäuse befindet, **gekennzeichnet durch** folgende Merkmale:
1.1 in jeder Öffnung (103) ist ein Stift (200) aus Kunststoff angebracht, der an beiden Enden mit je einem Stiftkopf (201) versehen ist, der jeweils mit einer unten am Stiftkopf angeordneten Verbindungsfläche (203) einstückig verbunden ist und beide Verbindungsflächen (203) mittels zweier elastisch-flexibler Wulstlaschen (204) einstückig miteinander verbunden sind,
1.2 zwischen den beiden Wulstlaschen (204), deren Außenflächen konkav nach außen ellipsoidartig ausgebildet sind, ist ein Spalt (205) vorgesehen, wobei infolge der Anordnung der Wulstlaschen (204) und des Spaltes (205) jeweils ein elastisch-flexibler Schaft des Stiftes (200) gebildet ist,
1.3 an jedem Stift (200) ist an beiden Enden im unteren Bereichs des Stiftkopfes (201), bzw. an der Verbindungsfläche (203) eine Anschlag-Ringwulst (207) angeformt,die an die, im jeweiligen Gehäuse vorgesehenen Begrenzungs-Ringkanten (105) anpressbar ist und
1.4 das erste Maß (20) zwischen den Außenflächen der beiden Wulstlaschen (204) ist etwas größer als der Durchmesser der Öffnungen (103).

2. Merkhilfe-Gerät nach Anspruch 1 in einer Ausführungsform, **dadurch gekennzeichnet,dass** die Begrenzungs-Ringkanten (105) bei zweigeteiltem Gehäuse jeweils am Gehäuse-Oberteil (101) und am GehäuseUnterteil (102) angeformt sind.

3. Merkhilfe-Gerät nach Anspruch 1 **dadurch gekennzeichnet, dass** bei einteiligem Gehäuse die Begrenzungs-Ringkanten (105) durch die Auflageöffnungen (30.1) gebildet sind, wobei auf der Oberseite und auf der Unterseite des Gehäuses je eine abnehmbare Auflage (30) angebracht ist.

4. Merkhilfe-Gerät nach Anspruch 1 **dadurch gekennzeichnet, dass** bei einteiliger Ausführungsform des Gehäuses (100) Gehäusehülsen (109) in dieses eingesetzt sind, deren Länge der Dicke des Gehäuses entspricht und die an einem Ende jeweils mit einer Begrenzungs-Ringkante (105) versehen sind.

## Claims

1. Memory-aid device which has pins with an elastic/flexible stem and has a flat housing (100) provided with a plurality of openings (103) of circular cross section, of which the centre lines (104) are oriented parallel to one another and perpendicularly to the plane of the housing and which serve for guiding longitudinally displaceable pins, which can be displaced into two end positions such that in each case one pin end projects out of the housing while the other pin end is located in the housing, **characterized by** the following features:
1.1 each opening (103) contains a plastics-material pin (200) which is provided, at both ends, with a pin head (201), which is connected in one piece in each case to a connecting surface (203) arranged at the bottom of the pin head, and the two connecting surfaces (203) are connected in one piece to one another by means of two elastic/flexible bead lugs (204),
1.2 a gap (205) is provided between the two bead lugs (204), of which the outer surfaces run concavely outwards in ellipsoidal fashion, wherein the arrangement of the bead lugs (204) and of the gap (205) forms a respective elastic/flexible stem of the pin (200),
1.3 each pin (200) has formed on it at both ends, in the lower region of the pin head (201), or on the connecting surface (203), an annular stop bead (207), which can be pressed onto the annular boundary edges (105) provided in the respective housing, and
1.4 the first extent (20) between the outer surfaces of the two bead lugs (204) is somewhat larger than the diameter of the openings (103).

2. Memory-aid device according to Claim 1, **characterized in that**, in the case of a two-part housing, the annular boundary edges (105) are formed in each case on the upper housing part (101) and on the lower housing part (102).

3. Memory-aid device according to Claim 1, **characterized in that**, in the case of a single-part housing, the annular boundary edges (105) are formed by the bearing openings (30.1), wherein a removable bearing means (30) is fitted in each case on the upper side and on the underside of the housing.

4. Memory-aid device according to Claim 1, **characterized in that**, in the case of a single-part embodiment of the housing (100), the latter has inserted into it housing sleeves (109), of which the length corresponds to the thickness of the housing and which are provided with an annular boundary edge (105) at each end.

## Revendications

1. Appareil mnémotechnique comprenant des broches ayant une tige élastiquement flexible, lequel appareil présente un boîtier plat (100), qui est pourvu d'une pluralité d'ouvertures (103) de section transversale circulaire, dont les axes médians (104) sont orientés parallèlement les uns aux autres perpendiculairement au plan du boîtier, et qui servent à guider des broches déplaçables longitudinalement qui peuvent être déplacées dans deux positions d'extrémité de telle sorte qu'une extrémité de broche fasse à chaque fois saillie hors du boîtier tandis que l'autre extrémité de broche se trouve à l'intérieur du boîtier, **caractérisé par** les caractéristiques suivantes :
1.1 une broche (200) en plastique est introduite dans chaque ouverture (103), est pourvue aux deux extrémités d'une tête de broche respective (201) qui est connectée à chaque fois d'une seule pièce à une surface de liaison (203) disposée en bas au niveau de la tête de broche et les deux surfaces de liaison (203) sont connectées d'une seule pièce l'une à l'autre au moyen de deux pattes en forme de boudin élastiquement flexibles (204),
1.2 une fente (205) est prévue entre les deux pattes en forme de boudin (204), dont les surfaces extérieures sont réalisées sous forme concave vers l'extérieur à la manière d'une ellipsoïde, une tige élastique flexible de la broche (200) étant à chaque fois formée du fait de l'agencement des pattes en forme de boudin (204) et de la fente (205),
1.3 un boudin annulaire formant butée (207) est façonné au niveau de chaque broche (200) au niveau des deux extrémités dans la région inférieure de la tête de broche (201), respectivement au niveau de la surface de liaison (203), lequel boudin peut être pressé contre des arêtes annulaires de limitation (105) prévues dans le boîtier respectif et
1.4 la première dimension (20) entre les surfaces extérieures des deux pattes en forme de boudin (204) est un peu plus grande que le diamètre des ouvertures (103).

2. Appareil mnémotechnique selon la revendication 1, **caractérisé en ce que** les arêtes annulaires de limitation (105), dans le cas d'un boîtier réalisé en deux parties, sont à chaque fois façonnées sur la partie supérieure du boîtier (101) et sur la partie inférieure du boîtier (102).

3. Appareil mnémotechnique selon la revendication 1, **caractérisé en ce que** dans le cas d'un boîtier réalisé en une seule partie, les arêtes annulaires de limitation (105) sont formées par des ouvertures d'appui (30.1), un appui amovible (30) étant à chaque fois appliqué sur le côté supérieur et sur le côté inférieur du boîtier.

4. Appareil mnémotechnique selon la revendication 1, **caractérisé en ce que** dans le cas d'une forme de réalisation en une seule partie du boîtier (100), des douilles de boîtier (109) sont insérées dans celui-ci, dont la longueur correspond à l'épaisseur du boîtier et qui sont prévues au niveau d'une extrémité d'une arête annulaire de limitation (105) respective.
